# EUROPÄISCHE PATENTANMELDUNG

(11) **EP 1 614 353 A1**
(43) Veröffentlichungstag der Anmeldung: **11.01.2006**
(21) Anmeldenummer: 05014148.0
(22) Anmeldetag: 30.06.2005
(51) Int. Cl.: A21C 3/02

(54) **Vorrichtung zum Zuführen und Umformen einer plastisch verformbaren Süsswarenmasse in ein Produkt**

(30) Priorität: 08.07.2004 DE 102004032992
(71) Anmelder: Sollich KG, 32105 Bad Salzuflen (DE)
(72) Erfinder: Ridderbusch, Gerhard, 32105 Bad Salzuflen (DE); Karl, Harald, 32105 Bad Salzuflen (DE)
(74) Vertreter: Rehberg Hüppe + Partner

(57) **Zusammenfassung**

Eine Vorrichtung (1) zum Zuführen und Umformen einer plastisch verformbaren Süßwarenmasse (11) in ein Produkt weist einen Seitenwände (13, 14) aufweisenden Trichter (10) zur Aufnahme der Masse (11) und zwei angetriebenen Walzen (2, 3) auf. Der Trichter (10) ist über dem Einzugsbereich (8) der Walzen (2, 3) angeordnet. Zumindest ein Bereich einer Seitenwand des Trichters (10) ist durch ein Förderband (16) ersetzt, dessen der Masse (11) im Trichter (10) zugekehrtes Trum in Richtung auf den Einzugsbereich (8) der Walzen (2, 3) angetrieben ist.

## Beschreibung

Die Erfindung betrifft eine Vorrichtung zum Zuführen und Umformen einer plastisch verformbaren Süßwarenmasse in ein Produkt. Unter einer plastisch verformbaren Süßwarenmasse werden Massen verstanden, die sich unter mechanischer Einwirkung leicht verformen lassen. Dazu gehören insbesondere komprimierbare Massen, deren Volumen bei der Formgebung veränderbar ist. Bei Massen aus Cerealien, beispielsweise Rice Crispies, Cornflakes, Haferflocken, Körnern, Honig, belüftetem Zucker- oder Fettbinder usw. können die einzelnen Partikel mehr oder weniger zusammengedrückt werden, wobei sich das Volumen ändert. Auch stark belüftete Massen, wie beispielsweise Negerkussschaum oder Marshmallow, unterliegen bei ihrer Verarbeitung einer plastischen Verformbarkeit. Unter einem Produkt wird je nach Formgebung ein Produktteppich verstanden, der eine gewisse Arbeitsbreite und eine Dicke aufweist. Ein solcher Produktteppich kann durch Längs- und Querschneiden in einzelne Produkte unterteilt werden. Unter "Produkt" werden aber auch einzelne geformte Produkte, also beispielsweise abgerundete Riegel verstanden, die aus einer Masse unmittelbar zu einzelnen Produktsträngen oder einzelnen Produkten geformt werden.

### STAND DER TECHNIK

Aus der AT 409 916 B ist eine Vorrichtung mit den Merkmalen des Oberbegriffs des Anspruchs 1 bekannt. Die Vorrichtung weist einen Trichter zur Aufnahme der Masse auf, der zwei parallele ortsfeste Seitenwände besitzt. Die dritte und die vierte Seitenwand des Trichters werden teilweise von leicht geneigt angeordneten ortsfesten Seitenwänden gebildet, deren untere Bereiche durch zwei angetriebene Forderbänder ersetzt sind. Die Förderbänder bilden damit einen Teil des Bodens des Trichters. Sie werden so angetrieben, dass die im Trichter befindliche Masse in einen Austrittsspalt gefördert wird, der von den einander zugekehrt angeordneten Umlenkrollen der beiden Förderbänder gebildet und begrenzt wird. Abständig unterhalb dieses Austrittsspalts der Förderbänder sind zwei angetriebene Walzen vorgesehen, so dass die Masse, der Schwerkrafteinwirkung folgend, aus dem Austrittsspalt des Trichters in den Einzugsbereich der angetriebenen Walzen gelangt. Die Walzen sind so aneinander angestellt, dass der aus dem Trichter austretende Massestrang in seiner Dicke weiter reduziert wird. In einem nachgeschalteten Rollensatz erhält dann das Produkt seine endgültige gewünschte Gestalt. Damit werden insgesamt drei Spalte oder formgebende Verengungen eingesetzt, um letztendlich ein Teigband in die gewünschte Form zu bringen.

Eine weitere bekannte Vorrichtung weist einen Trichter zur Aufnahme und Abgabe der zu verarbeitenden Masse auf. Der Trichter besitzt Seitenwände und ist oberhalb zweier Walzen in Relation zu diesen angeordnet, wobei die beiden Walzen gleichsam den Boden des Trichters bilden. Der Trichter besitzt in aller Regel zwei parallele, in Arbeitsrichtung der Vorrichtung ausgerichtete Seitenwände mit vertikaler Anordnung und eine vordere und eine hintere Seitenwand, die vertikal ausgerichtet oder geneigt angeordnet sind. Die Walzen werden gegenläufig angetrieben. Sie bilden einen Einzugsbereich für die am Boden des Trichters austretende Masse. Diese Masse wird durch einen Spalt zwischen den beiden Walzen hindurchgefördert und dabei je nach den Eigenschaften der Masse in Form gebracht und auch komprimiert. Auch das Nachrutschen bzw. Nachfließen der Masse im Trichter in Richtung auf den Einzugsbereich der Walzen ist von den Eigenschaften der jeweiligen Masse stark abhängig.

Neben den angesprochenen Förderproblemen für die Masse bestehen Volumen- und Gewichtsprobleme an dem geformten Produkt. Insbesondere bei großen Arbeitsbreiten kommt es vor, dass in der Mitte des ausgepressten Produktstrangs oder Produktteppichs eine vergleichsweise stärkere Nachförderung der Masse und in der Folge eine örtlich höhere Verdichtung der Masse stattfindet als in den beiden Randbereichen des Produktstrangs. Die sich randseitig ergebenden Produkte besitzen dann zwar oder zumindest etwa die vorgeschriebene Gestalt, also das Volumen, sind aber untergewichtig.

### AUFGABE DER ERFINDUNG

Der Erfindung liegt die Aufgabe zugrunde, eine Erfindung der eingangs beschriebenen Art derart weiterzubilden, dass mit ihr der ausgeformte Produktteppich bzw. die einzelnen Produkte über die Arbeitsbreite hinsichtlich des jeweiligen Gewichtes und Volumens gleichmäßiger als bisher hergestellt werden können.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Erfindung geht von dem Gedanken aus, eine Seitenwand des Trichters durch ein Förderband zu ersetzen. Dies bedeutet, dass die bisher vorgesehene ortsfeste Seitenwand entfernt oder jedenfalls nicht mehr wirksam von Masse tangiert wird. Die Seitenwand ist gleichsam als bewegliche Vorderwand unfunktioniert. Das der Masse zugekehrte Trum wird in Richtung auf die Walzen bewegt und angetrieben. Die Masse wird durch die gleichsam beweglich gemachte Seitenwand zusätzlich zu einwirkenden Gewichtskräften und etwa einwirkenden Sog- und Förderkräften des Walzspaltes angetrieben. Dies bezieht sich in der Regel auf eine komplette Seitenwand. Es ist aber auch möglich, nur einen oder mehrere Bereiche einer solchen Seitenwand durch je ein Förderband zu ersetzen. Das oder die Förderbänder sollten so angeordnet sein, dass die verstärkte Förderwirkung in den Randbereichen des Produktstrangs über die Arbeitsbreite eintritt. Es ist beispielsweise auch möglich, insbesondere die in Arbeitsrichtung hintere Seitenwand des Trichters in drei Bereiche zu unterteilen und die beiden randseitigen Förderbänder mit vergleichsweise höherer Geschwindigkeit anzutreiben als das mittlere Förderband. Auf diese Weise wird der Massestrom, der dem Einzugsbereich der Walzen zugeleitet wird, über die Arbeitsbreite vergleichmäßigt. Dies äußert sich in einer vergleichmäßigten Komprimierung der auszuformenden Masse. Letztlich entstehen damit gewichtsgenauere Produkte über den Querschnitt, also verglichen zwischen den Randbereichen und dem Mittelbereich. Vorteilhaft ergibt sich auch eine schonendere Behandlung der möglicherweise empfindlichen Massen und eine Vergleichmäßigung über die Arbeitsbreite. Die durch die Walzen entstehende Formgebung der Produkte bzw. des Produktteppichs wird verbessert.

Das Förderband weist eine geschlossene Oberfläche auf. Es ist insbesondere als Kunststoffband ausgebildet und weist eine glatte oder alternativ raue Oberfläche auf. Das Förderband ist also nicht in der Masse angeordnet, sondern begrenzt die Masse im Trichter nach außen. Ein solches Förderband aus einer Kunststofffolie, gegebenenfalls verstärkt durch Gewebeeinlagen oder dergleichen, lässt sich vorteilhaft um recht kleine Biegeradien umlenken, so dass der Abstand zwischen dem der Masse zugekehrten und dem der Masse abgekehrten Trum klein gehalten werden kann.

Insbesondere kann das Förderband über die Arbeitsbreite der Vorrichtung reichend angeordnet sein. Damit lässt sich die vordere oder hintere Trennwand des Trichters insgesamt ersetzen, die sich zwischen zwei im Wesentlichen vertikal ausgerichteten Seitenwänden parallel zur Förderrichtung erstrecken.

Das Förderband kann an seinem einen, dem Einzugsbereich der Walzen zugekehrten Ende über eine Messerkante geführt sein. Mit diesem Bereich liegt das Förderband in der Regel auf der Oberfläche einer der beiden Walzen auf. Es bleibt gleichsam unter dem Trichter eine hinreichend große Oberfläche der Walze mit der Masse in Wirkverbindung, so dass die Masse aus diesem Einzugsbereich in den Spalt zwischen den Walzen eingezogen werden kann. Unter einer Messerkante wird eine Umlenkstelle des Förderbandes verstanden, an der ein sehr kleiner Radius verwirklicht wird. Gleichzeitig wird damit eine hinreichend sichere Abstreichwirkung der Masse zwischen Walze und dem Förderband an der Messerkante erreicht.

Die Walzen können zur Bildung eines Produktteppichs mit über die Arbeitsbreite konstanter Höhe bzw. Dicke als Glattwalzen ausgebildet sein. Solche Glattwalzen erbringen die erforderliche Förderwirkung auf die Masse. Sie legen den Produktteppich in seiner Höhe nach fest, wobei durch die vergleichmäßigte Massezuführung auch eine vergleichmäßige Komprimierung der ausgeformten Masse zu dem Produktteppich entsteht.

Wenn mit dem Walzenformer sogleich einzelne Produkte ausgeformt werden sollen, ist eine der Walzen als Formatwalze ausgebildet. Dies bedeutet, dass sie entsprechende Vertiefungen oder Durchbrechungen aufweist, die mit Masseportionen gefüllt werden, wobei jede Masseportion ein Produkt darstellt. Einer solchen Formatwalze kann eine geriffelte Stopfwalze zugeordnet sein, wobei die Stopfwalze mit ihrer Achse vergleichsweise höher angeordnet ist als die schräg darunter befindliche Formatwalze. Die Stopfwalze drückt die Masse in die Durchbrechungen der Formatwalze ein. Auch hier erweist sich der Ersatz einer stillstehenden Trichterwandung durch ein angetriebenes Förderband als vorteilhaft für die gewichtsgenauere Herstellung der Produkte.

Die angetriebenen Walzen können gleiche oder unterschiedliche Durchmesser aufweisen. Zur Veränderung des Einzugsspalts können die Walzen gegeneinander verstellbar vorgesehen sein. Auch gleiche oder unterschiedliche Oberflächengeschwindigkeiten der Walzen sind einfach realisierbar und richten sich nach den Eigenschaften der jeweiligen Masse und der gewünschten Formgebung der daraus hergestellten Produkte.

Die Walzen weisen in der Regel einen relativ großen Durchmesser auf. Mindestens eine der Walzen kann dabei einen Durchmesser größer als 180 mm besitzen.

Das Förderband kann in seiner Antriebsgeschwindigkeit, in der relativen Höhe ihrer Anordnung und/oder in ihrer Neigung zu einer Horizontalebene einstellbar ausgebildet sein. Auch damit lässt sich eine feinfühlige Einstellung der Nachförderung der Masse aus dem Trichter in den Einzugsbereich an die Eigenschaften der Masse anpassen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Seitenansicht einer ersten Ausführungsform der Vorrichtung und
- **Fig. 2**: eine Draufsicht auf die Vorrichtung gemäß Fig. 1.

### FIGURENBESCHREIBUNG

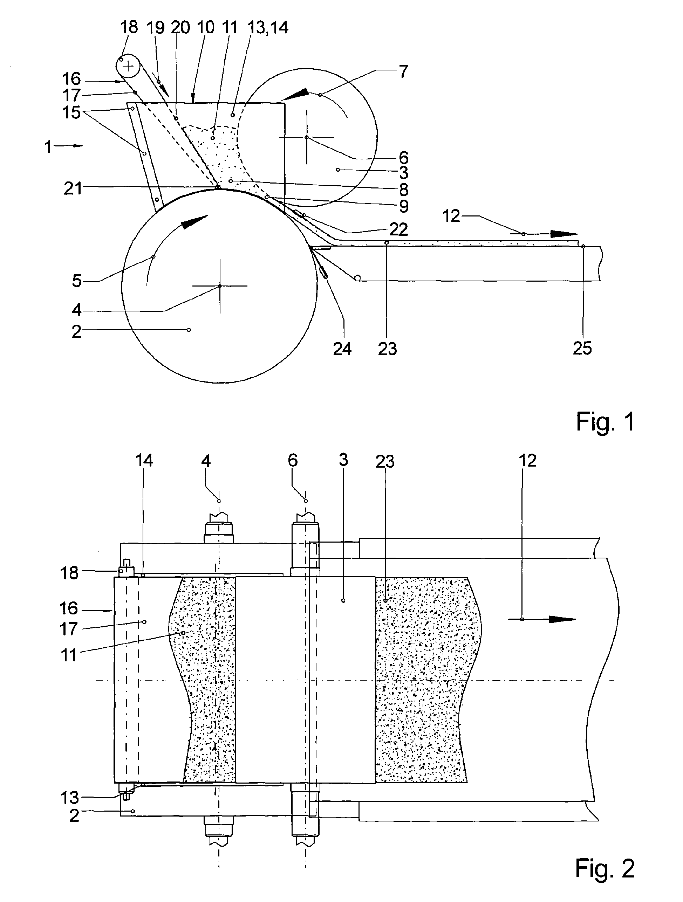

Fig. 1 zeigt die für das Verständnis der Erfindung wesentlichen Elemente an einer ersten Ausführungsform der Vorrichtung 1. Die Vorrichtung 1 weist zwei Walzen 2 und 3 auf. Die Walze 2 ist um eine Achse 4 in Richtung des Pfeils 5 angetrieben. Die Walze 3 ist um eine Achse 6 in Richtung des Pfeils 7 angetrieben. Die Walzen 2 und 3 sind so gegeneinander angestellt und angeordnet, dass sie miteinander einen Einzugsbereich 8 und an der engsten Stelle einen Spalt 9 bilden. Die Walzen 2 und 3 sind gegeneinander verstellbar, und zwar relativ zueinander, wobei mindestens eine Walze in ihrer Höhe oder in ihrer Winkellage ver- und einstellbar ausgebildet ist. Insoweit wird in erster Linie der Spalt 9 verändert, während sich eine solche Verstellung auf den Einzugsbereich 8 vergleichsweise weniger auswirkt.

Oberhalb und in Zuordnung zu den Walzen 2 und 3 ist ein Trichter 10 vorgesehen, der die auszuformende Masse 11 enthält. Bei kontinuierlicher Produktion wird die Masse 11 im Trichter 10 immer wieder ergänzt bzw. nachgefüllt. Der Trichter 10 weist zwei in Arbeitsrichtung 12 vertikal ausgerichtete und angeordnete Seitenwandungen 13 und 14 auf, die im Wesentlichen vertikal ausgerichtet und angeordnet sind. In ihrem unteren Bereich sind diese Seitenwandungen 13 und 14 an den Umfang der Walze 2 angepasst und angestellt. Die Walze 2 ist breiter ausgebildet als die Walze 3, so dass die Walze 3 mit ihren Stirnwandungen zwischen den Seitenwänden 13 und 14 arbeitet. Die Walze 3 ersetzt hier eine vordere Begrenzungswand des Trichters 10, sofern man gedanklich davon ausgeht, dass ein solcher Trichter 10 vier Seitenwände aufweist. Es ist aber auch möglich, zusätzlich zu der Walze 3 eine solche vordere Seitenwand vorzusehen, erforderlich ist dies im vorliegenden Ausführungsbeispiel jedoch nicht.

Der Trichter 10 besitzt hinten, also entgegengesetzt zur Arbeitsrichtung 12, keine Seitenwand. Die seitlichen Seitenwände 13 und 14 sind hier lediglich über Verbindungsstreben 15 aneinander gehalten bzw. aneinander abgestützt. Die hintere Seitenwand des Trichters 10 ist durch ein Förderband 16 ersetzt bzw. gebildet. Das Förderband 16 weist ein Band 17 auf, welches eine geschlossene Oberfläche besitzt und insbesondere aus Kunststoff ausgebildet ist. Das Band 17 des Förderbandes 16 wird von einer Antriebswalze 18 in Richtung des Pfeils 19 angetrieben. Das Trum 20, welches der Masse 11 zugekehrt ist, bewegt sich damit in schräger Richtung von oben nach unten auf den Einzugsbereich 8 der Walzen 2 und 3 zu. Dieses obere Trum 20 bzw. das Förderband 16 stellt gleichsam eine angetriebene und damit beweglich gemachte Seitenwandung des Trichters 10. Das dem Einzugsbereich 8 der Walzen 2 und 3 zugekehrte Ende des Bandes 17 ist über eine Messerkante 21 geführt, um einen besonders kleinen Umlenkradius zu verwirklichen. Das Förderband 16 kann in seiner Neigung und in der Relativanordnung zu der Oberfläche der Walze 2 verstellbar ausgebildet sein. Auch die Oberflächengeschwindigkeit des Bandes 17 ist regelbar bzw. steuerbar ausgebildet.

Im Bereich des Spaltes 9 ist ein erster Abstreifer 22 angeordnet, um den aus der Masse 11 gebildeten Produktteppich 23 von der Oberfläche der Walze 3 zu lösen. Die Oberflächen der Walzen 2 und 3 sind glatt ausgebildet, so dass mit ihrer Hilfe die Masse 11 zu dem Produktteppich 23 verformt wird, der über die Arbeitsbreite reichend gleiche Dicke bzw. Höhe aufweist. Gegen die Oberfläche der Walze 2 ist ein zweiter Abstreifer 24 angestellt, der dazu dient, den Produktteppich 23 von der Oberfläche der Walze 2 zu lösen und auf ein Abförderband 25 zu überführen, auf dem sich der Produktteppich 23 in Arbeitsrichtung 12 bewegt. Der Produktteppich 23 kann dann mit einem Längs- und einem Querschneider (nicht dargestellt), in einzelne Produktstücke, z. B. in Riegelware, aufgeschnitten bzw. unterteilt werden.

### BEZUGSZEICHENLISTE

- 1: Vorrichtung
- 2: Walze
- 3: Walze
- 4: Achse
- 5: Pfeil
- 6: Achse
- 7: Pfeil
- 8: Einzugsbereich
- 9: Spalt
- 10: Trichter

- 11: Masse
- 12: Arbeitsrichtung
- 13: Seitenwandung
- 14: Seitenwandung
- 15: Verbindungsstrebe
- 16: Förderband
- 17: Band
- 18: Antriebswalze
- 19: Pfeil
- 20: Trum

- 21: Messerkante
- 22: Abstreifer
- 23: Produktteppich
- 24: Abstreifer
- 25: Abförderband
- 26: Förderband
- 27: Breitschlitzdüse

## Patentansprüche

1. Vorrichtung zum Zuführen und Umformen einer plastisch verformbaren Süßwarenmasse (11) in ein Produkt, mit einem Trichter (10) zur Aufnahme der Masse (11), der zwei parallele ortsfeste Seitenwände (13, 14) und eine dritte Seitenwand mit einem angetriebenen Förderband (16) aufweist, und mit zwei angetriebenen Walzen (2, 3), **dadurch gekennzeichnet, dass** die eine angetriebene Walze (2) den Boden des Trichters (10) bildet und die andere abgetriebene Walze (3) als vierte Seitenwand des Trichters (10) angeordnet ist, so dass von den beiden angetriebenen Walzen (2, 3) im Trichter (10) ein Einzugsbereich (8) mit Spalt (9) für die Ausformung des Produkts gebildet wird, und dass das der Masse (11) im Trichter (10) zugekehrte Trum des Förderbandes (16) in Richtung auf den Einzugsbereich (8) der Walzen (2, 3) angetrieben ist.

2. Vorrichtung nach Anspruch 1, **dadurch gekennzeichnet, dass** das Förderband (16) eine geschlossene Oberfläche aufweist.

3. Vorrichtung nach Anspruch 1 oder 2, **dadurch gekennzeichnet, dass** das Förderband (16) über die Arbeitsbreite der Vorrichtung (1) reichend angeordnet ist.

4. Vorrichtung nach mindestens einem der Ansprüche 1 bis 3, **dadurch gekennzeichnet, dass** das Förderband (16) an seinem einen dem Einzugsbereich (8) der Walzen (2, 3) zugekehrten Ende über eine Messerkante (21) geführt ist.

5. Vorrichtung nach mindestens einem der Ansprüche 1 bis 4, **dadurch gekennzeichnet, dass** die Walzen (2, 3) zum Bilden eines Produktteppichs (23) als Glattwalzen ausgebildet sind.

6. Vorrichtung nach mindestens einem der Ansprüche 1 bis 4, **dadurch gekennzeichnet, dass** eine der Walzen (2) zur Bildung einzelner Produkte als Formatwalze ausgebildet ist.

7. Vorrichtung nach mindestens einem der Ansprüche 1 bis 6, **dadurch gekennzeichnet, dass** die angetriebenen Walzen (2, 3) unterschiedliche Durchmesser aufweisen und/oder eine der Walzen zur Veränderung des Einzugsbereichs (8) und des Spalts (9) verstellbar angeordnet ist.

8. Vorrichtung nach mindestens einem der Ansprüche 1 bis Anspruch 7, **dadurch gekennzeichnet, dass** mindestens eine der Walzen (2, 3) einen Durchmesser größer 180 mm aufweist.

9. Vorrichtung nach mindestens einem der Ansprüche 1 bis Anspruch 8, **dadurch gekennzeichnet, dass** das Förderband (16) in seiner Antriebsgeschwindigkeit und/oder seiner Neigung einstellbar ausgebildet ist.
